# EUROPÄISCHE PATENTSCHRIFT

(11) **EP 1 522 397 B1**
(45) Veröffentlichungstag und Bekanntmachung des Hinweises auf die Patenterteilung: **08.08.2007**
(21) Anmeldenummer: 04023859.4
(22) Anmeldetag: 07.10.2004
(51) Int. Cl.: B29C 51/42, B29C 51/46, B29C 35/08, B29C 51/04

(54) **Vorrichtung zum Verformen von erwärmten Platten oder Folienbahnabschnitten aus thermoplastischem Kunststoff**
Apparatus for shaping heated thermoplastic plates or sheets
Appareil pour le formage des plaques ou sections d'une bande de film thermoplastiques chauffées

(30) Priorität: 10.10.2003 DE 20315581 U
(43) Veröffentlichungstag der Anmeldung: 13.04.2005
(73) Patentinhaber: ILLIG Maschinenbau GmbH & Co. KG, 74081 Heilbronn (DE)
(72) Erfinder: Schwarzmann, Peter, 74081 Heilbronn (DE)

(56) Entgegenhaltungen:
- EP-A2- 0 450 482
- GB-A- 1 402 661
- GB-A- 1 483 454
- US-A- 3 357 054
- US-A- 3 787 158

## Beschreibung

Die Erfindung betrifft eine Vorrichtung zum Verformen von erwärmten Platten oder Folienbahnabschnitten aus thermoplastischem Kunststoff nach der Gattung des Hauptanspruches.

Bei einer solchen Vorrichtung wird die Heizeinrichtung horizontal verschoben zwischen einer Heizstellung über der Platte oder über dem Folienbahnabschnitt und einer Ruheposition. Die Heizstellung ist dabei entweder in der Formstation, dann wird die Heizeinrichtung in dieser pro Takt zwischen Ruheposition und Formstation verfahren und/oder eine Heizstation ist der Formstation vorangesetzt, und eine Transporteinrichtung dient dem Transport der Platte oder des Folienbahnabschnittes zwischen Heizstation und Formstation.

Bezüglich der Heizungsbewegung gibt es verschiedene Anforderungen. So soll die Bewegung der Heizeinrichtung möglichst rasch erfolgen, weil die Fahrzeit bei bestimmten Maschinenausführungen direkt die Taktzeit beeinflusst. Hinzu kommt der sogenannte Überfahreffekt, d.h. die Heizeinrichtung fährt von der Ruheposition zunächst über die Platte und nach dem Heizen wieder zurück. Das bedeutet, dass die eine Seite der Platte, die die Heizeinrichtung zuerst überfährt, länger beheizt wird als die Seite, über der die Heizeinrichtung am Ende der Bewegung ankommt. Bei der Rückfahrt ist es umgekehrt, d.h. die beim Vorfahren länger beheizte Seite wird jetzt wiederum länger beheizt, weil die Heizeinrichtung diese Seite zuletzt verlässt. Dem könnte man nur durch zwei Ruhepositionen - gegenüberliegend - begegnen, was aus verschiedene Gründen nicht möglich ist. Folge dieser Fahrweise ist eine unterschiedlich lang beheizte Platte, wobei dieser Effekt umso stärker ist, je langsamer die Fahrgeschwindigkeit ist.
Ein weiteres Problem kommt durch den Einsatz von gitterartig angeordneten Strahlern in Form von Keramikstrahlern, Quarzstrahlern oder Halogenstrahlern, die alle erschütterungsempfindlich sind. Man muss also darauf achten, dass das Anfahren der Endlage sanft und ohne Stöße erfolgt, was wiederum keine zu hohen Verfahrgeschwindigkeiten zulässt.

Ein weiteres Problem bei der Heizungsbewegung liegt darin, dass beim Ausfall der Energieversorgung Brandgefahr besteht, sollte die Heizeinrichtung über der Platte stehen bleiben. Die Strahler haben noch soviel Wärme gespeichert, dass auch beim Abschalten ihrer Energiezufuhr zunächst noch eine weitere Erwärmung der Platte erfolgt, diese dadurch erweicht und auf die Unterheizung fällt. Ein Brand kann die Folge sein. Es muss also dafür gesorgt werden, dass bei Spannungsausfall die Heizeinrichtung noch in Ruheposition fahren kann.

Aus der DE 22 16 651 A1 ist es bekannt, die Heizungsbewegung mittels eines Pneumatikzylinders vorzunehmen. Dieser ermöglicht zwar bei Energieausfall noch eine pneumatische Bewegung der Heizung in Ruheposition durch bekanntes Vorsehen eines Druckluftpolsters, aber die Fahrbewegung kann wegen der genannten Probleme der Bruchempfindlichkeit nur relativ langsam erfolgen, was die Probleme des Überfahreffektes und der Taktzeitbeeinflussung mit sich bringt.

Durch Maschinenlieferungen des Anmelders ist es bekannt, elektromotorische Antriebe für die Bewegung der Heizeinrichtung in Form eines Kurbeltriebes einzusetzen. Dies bringt zwar eine rasche Bewegung der Heizeinrichtung mit sanftem Anlauf der Endlagen durch einen sinusförmigen Bewegungsablauf. Einem Spannungsausfall muss aber mit aufwendigen Mitteln - Energiespeicherung für diesen Notfall - begegnet werden. Dies verteuert die Vorrichtung erheblich.

Die Druckschrift GB-A-1 483 454 beschreibt eine Vorrichtung zur Herstellung von schalenförmig vertieften Kunststoffplatten, die auch als Doppelmaschine ausgebildet sein kann, wobei zwei Vorrichtungen neben einander angeordnet sind. Während bei der einen Maschine die Kunststoffplatte zur Verformung erwärmt wird, befindet sich die Kunststoffplatte der anderen Maschine nach der erfolgten Verformung in der Kühlphase. Ist die jeweiligen Heizphase abgeschlossen, wird eine Heizeinrichtung, die nur einmal ausgebildet ist, von der einen zur anderen Vorrichtung verschoben. Der Antrieb der verschiebbaren Heizeinrichtung ist als ein Fluidsystem ausgebildet, welches Drosseln aufweist, die manuell stufenlos einstellbar sind, um die Geschwindigkeit der Verschiebung der Heizeinrichtung einzustellen. Die Heizeinrichtung wird mit konstanter Geschwindigkeit zwischen den beiden Verformungseinrichtungen verschoben. Eine Möglichkeit zur Beeinflussung der Geschwindigkeit während der Verschiebung ist nicht vorgesehen.

Die Schrift US-A-3787 159 zeigt einen Twinsheet - Thermoformer mit ortsfester Heizeinrichtung und verschiebbarer Plattentransporteinrichtung. Der Antrieb der Plattentransporteinrichtung ist als Fluidantrieb ausgebildet. Durch ortsfeste Endschalter, die auf der Verschiebestrecke der Plattentransporteinrichtung angeordnet sind, wird das Fluid alternativ über zwei unterschiedliche Wege geleitet, die unterschiedliche Verschiebegeschwindigkeiten zur Folge haben. Die Verschiebung beginnt mit einer höheren Geschwindigkeit, die mittels des Endschalters auf eine niedrigere Geschwindigkeit umgeschaltet wird. Eine Möglichkeit zur Beeinflussung der niedrigen Geschwindigkeit während der Verschiebung ist nicht vorgesehen. Die Vorrichtung fährt mit konstanter Geschwindigkeit in die Endlage.

Der Erfindung liegt die Aufgabe zugrunde, die Vorrichtung so zu gestalten, das die Bewegung der Heizeinrichtung rasch und trotzdem mit einem sanften Anfahren der Endlagen erfolgt und bei Energieausfall das Fahren in Ruheposition zur Vermeidung einer Brandgefahr ohne aufwendige teuere Maßnahmen vorgenommen werden kann.

Zur Lösung der Aufgabe werden die kennzeichnenden Merkmale des Hauptanspruches vorgeschlagen.

Ein Ausführungsbeispiel der Erfindung und eine vorteilhafte Weiterbildung sind anhand der schematischen Zeichnungen einer Vorrichtung mit vorangestelltem Plattenmagazin und je einer Heizeinrichtung in der Formstation und in der Beschickungsstation sowie mit wahlweisem Arbeiten von der Folienrolle näher beschrieben.

Es zeigt:

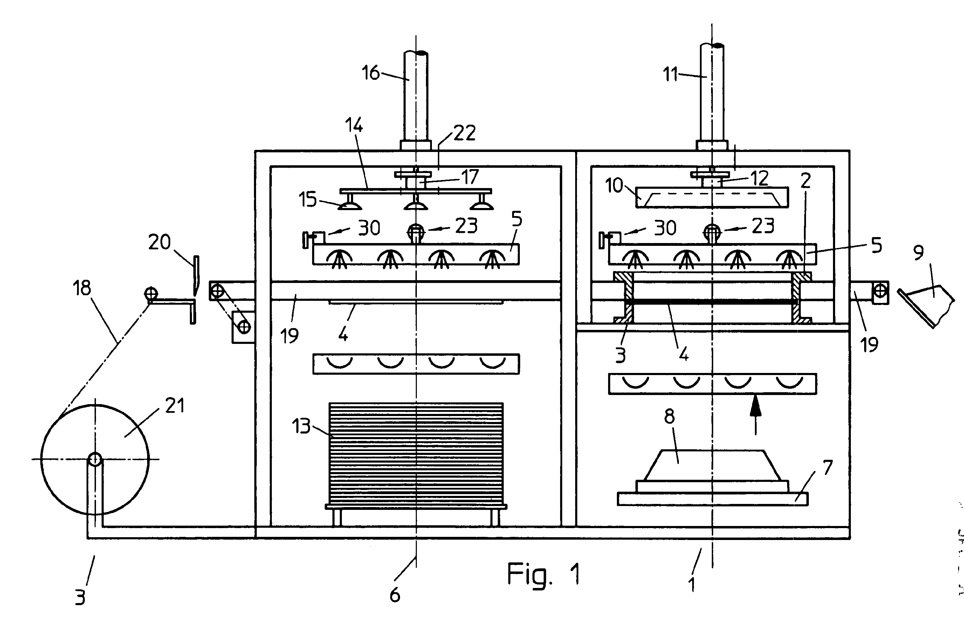

- Figur 1:: eine Vorderansicht der Vorrichtung.

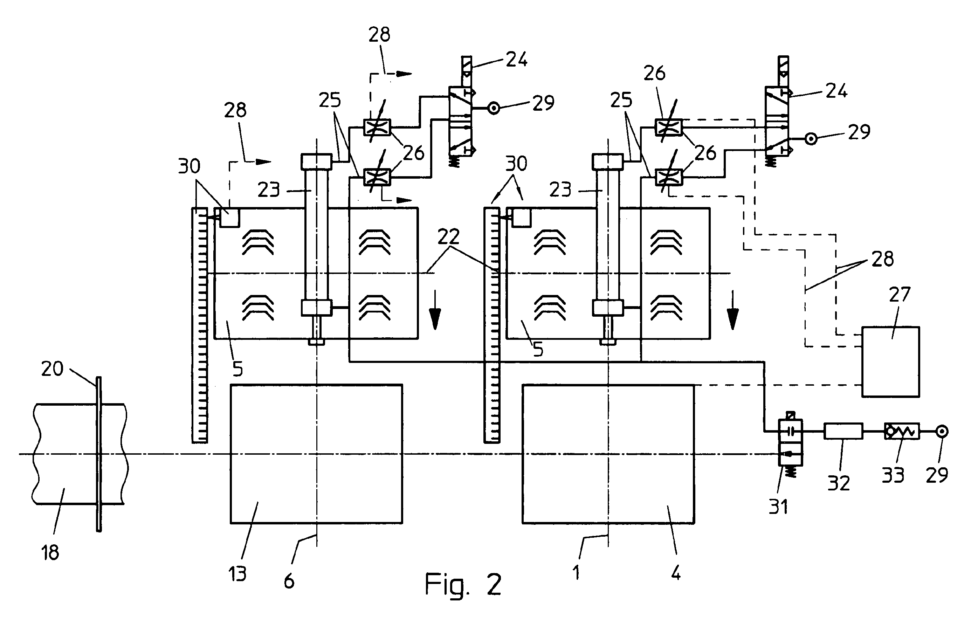

- Figur 2:: eine Draufsicht auf die Heizeinrichtung und deren Antriebseinrichtung.
- Figur 3: eine Variation des Antriebes der Heizeinrichtung.

Die Vorrichtung besteht aus einer Formstation 1 mit zwei Spannrahmen 2, 3, von denen der obere Spannrahmen 2 höhenverschiebbar ist und die beide im Zusammenwirken eine Platte 4 oder einen Folienbahnabschnitt aus thermoplastischem Kunststoff einspannen. Über eine Heizeinrichtung 5, angeordnet in der Formstation 1 und/oder in der Beschickungsstation 6, erfolgt die Erwärmung der Platte 4 oder des Folienbahnabschnittes auf Verformungstemperatur. Mittels einer auf dem höhenbeweglichen Formtisch 7 angeordneten Form 8 und durch Anlegen von Vakuum wird die Platte 4 oder der Folienbahnabschnitt zu einem Formteil 9 tiefgezogen. Unterstützt wird das Tiefziehen ggf. durch einen Vorstrecker 10, der mit einer Antriebseinrichtung 11 über eine Kupplung 12 verbunden ist.

Seitlich der Formstation 1 ist wahlweise eine Beschickungsstation 6 angeordnet, in die die Platten 4 als Stapel 13 eingelegt werden. Über eine Saugerplatte 14 mit an Vakuum anschließbaren Saugern 15 wird jeweils die oberste Platte 4 des Stapels 13 abgehoben und an die Transporteinrichtung 19 übergeben, die beide Stationen 6, 1 verbindet. Die Vertikalbewegung der Saugerplatte 14 erfolgt über die Antriebseinrichtung 16. Antriebseinrichtung 16 und Saugerplatte 14 sind über die Kupplung 17 verbunden.

Wenn die Vorrichtung nicht vom Plattenstapel 13 arbeitet, sondern Folienbahnabschnitte verformt, wird eine Folienbahn 18 von einer Rolle 21 mittels einer Transporteinrichtung 19 abgezogen, eine Querschneideeinrichtung 20 trennt diese Folienbahnabschnitte ab und die Transporteinrichtung 19 bringt sie in die einzelnen Stationen 6,1.

In der Formstation 1 und/oder in der vorgeschalteten Beschickungsstation 6 ist eine Heizeinrichtung 5 angeordnet, die aus einer Oberheizung und ggf. aus einer Unterheizung besteht und generell als Heizeinrichtung 5 bezeichnet wird. Die horizontale Bewegung der Heizeinrichtung 5 zwischen einer Ruheposition 22 und der Heizstellung erfolgt über einen Pneumatikzylinder 23, gesteuert über ein Ventil 24, das von einer Druckluftquelle 29 gespeist wird. In den Zuleitungen 25 zu dem Pneumatikzylinder 23 ist je eine im Querschnitt stufenlos veränderbare Drossel 26 eingebaut, die so gestaltet ist, dass ihr Querschnitt von einer Steuerung 27 aus über eine Steuerleitung 28 verändert werden kann. Beispielsweise kann es sich bei der Drossel 26 um ein Proportionalventil handeln, dessen Querschnitt proportional zur anliegenden Spannung ist.
Jede Heizeinrichtung 5 ist mit einem beliebigen handelsüblichen Wegmeßsystem 30 versehen, mit dem die Lage der Heizeinrichtung 5 festgestellt und über eine Steuerleitung 28 der Steuerung 27 gemeldet wird. Im einfachsten Fall handelt es sich bei diesem Wegmeßsystem 30 um einzelne - vorzugsweise einstellbare - Schalter, die eine bestimmte erreichte Stellung der Heizeinrichtung an die Steuerung 27 melden.

Beim Verfahren der Heizeinrichtung zwischen Ruheposition 22 und Heizstellung wird nun die Drossel 26 zum Zuführen der Druckluft zur Erzeugung der Bewegung ganz geöffnet, die abluftseitige Drossel 26 zunächst auch. Die Heizeinrichtung 5 verfährt sehr rasch. Bei Annäherung an eine Endlage - Ruheposition bzw. Heizstellung - erfolgt eine Verringerung des Querschnittes vorzugsweise der entsprechenden abluftseitigen Drossel 26 und damit Drosselung der Fahrgeschwindigkeit in der Weise, dass die Bewegung gerade in Endlage zum Stehen kommt, ohne dass ein ruckartiges Abbremsen erfolgt. Eine zusätzliche Veränderung des Querschnittes der zuluftseitigen Drossel 26 ist möglich.

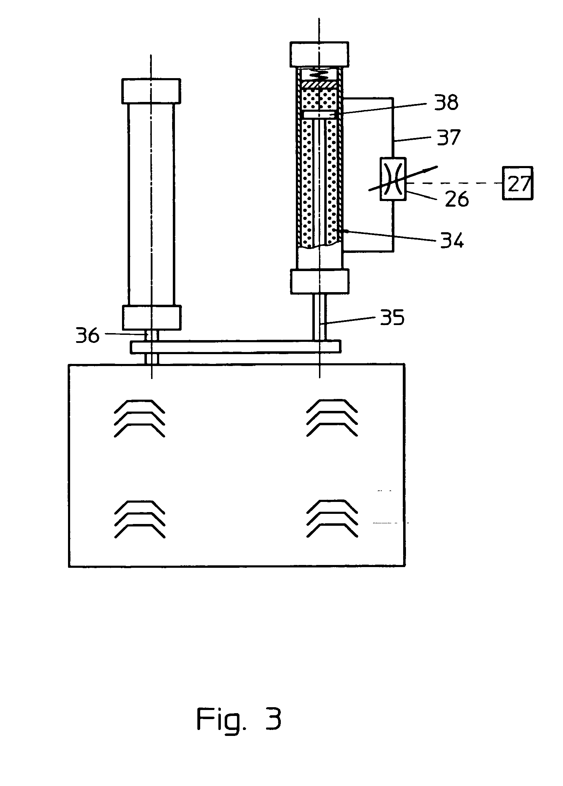

Eine andere Möglichkeit der Drosselung der Fahrbewegung der Heizeinrichtung 5 in Abhängigkeit ihrer Lage ist in Figur 3 dargestellt. Parallel zum Pneumatikzylinder 23 ist ein Dämpfungszylinder 34 mit Kolben 38 angeordnet. Die Kolbenstange 36 des Pneumatikzylinders 23 ist mit der Kolbenstange 35 des Dämpfungszylinder 34 - oder wahlweise auch mit der Heizeinrichtung 5 direkt - verbunden. Der Dämpfungszylinder 34 ist mit Öl gefüllt und das Öl läuft über die Verbindungsleitung 37 zwischen den beiden Zylinderseiten um. In der Verbindungsleitung 37 ist eine Drossel 26 eingebaut, die im Querschnitt durch entsprechende Ansteuerung über die Steuerung 27 verändert werden kann.

Durch Versuche und eine entsprechende Parametrierung der Steuerung 27 kann man den Zeitpunkt des Beginns der Drosselung und die Geschwindigkeit der Drosselung einmalig durch Versuche ermitteln und in der Steuerung 27 hinterlegen. Man hat auf diese Weise einen optimal schnellen Bewegungsablauf der Heizeinrichtung 5 ohne Gefahr der Beschädigung ihrer Heizelemente.

Um die Heizeinrichtung 5 im Falle des Energieausfalles in Ruheposition 22 zurückfahren zu können wird in Weiterbildung der Erfindung vorgeschlagen, die Seite des Pneumatikzylinders 23, die zum Fahren in Ruheposition 22 beaufschlagt werden muss, mit einem Durchgangsventil 31 zu verbinden, das mit einem Druckspeicher 32 in Verbindung steht. Dieser Druckspeicher 32 wird über die Druckluftquelle 29 und ein Rückschlagventil 33 gespeist. Im Betrieb der Vorrichtung ist das Durchgangsventil 31 geschlossen, es öffnet bei Energieausfall und verbindet so die eine Seite des Pneumatikzylinders 23 mit dem Druckluftspeicher 32, wodurch das Bewegen der Heizeinrichtung 5 in Ruheposition 22 erfolgt.

## Patentansprüche

1. Vorrichtung zum Verformen von erwärmten Platten (4) oder Folienbahnabschnitten aus thermoplastischem Kunststoff durch Differenzdruck, bestehend aus einer Formstation (1), einem höhenbeweglichen Formtisch (7) mit einer Form (8) und einer zwischen einer Ruheposition und einer Heizstellung mittels eines Pneumatikzylinders (23) verschiebbaren Heizeinrichtung (5), **gekennzeichnet durch** ein Wegmeßsystem (30) zum Erfassen der Stellung der Heizeinrichtung (5), **durch** eine Drossel (26) in der Zu- und/oder Abluftleitung zum Pneumatikzylinder (23) oder in der Verbindungsleitung (37) der beiden Zylinderseiten eines parallel zum Pneumatikzylinder (23) angeordneten Dämpfungszylinders (34), dessen Kolbenstange (35) mit der Kolbenstange (36) des Pneumatikzylinders (23) oder mit der Heizeinrichtung (5) verbunden ist und **durch** eine Steuerung (27), die in Abhängigkeit der Lage der Heizeinrichtung (5) den Querschnitt der Drosseln (26) verändert.

2. Vorrichtung nach Anspruch 1, **dadurch gekennzeichnet, dass** die Seite des Pneumatikzylinders (23), deren Beaufschlagung die Fahrt der Heizeinrichtung (5) in Ruheposition (22) ausführt, über ein Durchgangsventil (31) mit einem von einer Druckluftquelle (29) gespeisten Druckspeicher (32) in Verbindung steht, wobei dieses Durchgangsventil (31) im Betrieb der Vorrichtung geschlossen und bei Energieausfall geöffnet ist.

## Claims

1. A device for shaping heated plates (4) or film strip sections of thermoplastic polymer by means of differential pressure, consisting of a moulding station (1), a vertically movable moulding table (7) with a mould (8) and a heating apparatus (5) that can be displaced between an idle position and a heating position by means of a pneumatic cylinder (23), **characterized by** a position measuring system (30) for determining the position of the heating apparatus (5), by a flow restrictor (26) in the supply air and/or exhaust air line of the pneumatic cylinder (23) or in the connecting line (37) between both cylinder sides of a damping cylinder (34) that is arranged parallel to the pneumatic cylinder (23) and the piston rod (35) of which is connected to the piston rod (36) of the pneumatic cylinder (23) or to the heating apparatus (5), and by a control system (27) that varies the cross section of the flow restrictors (26) in dependence on the position of the heating apparatus (5).

2. The device according to Claim 1, **characterized in that** the side of the pneumatic cylinder (23) that, when acted upon, causes the displacement of the heating apparatus (5) into the idle position (22) is connected to a pressure accumulator (32) that is fed by a compressed air source (29) with the aid of a straight-way valve (31), wherein this straight-way valve (31) is closed during the operation of the device and open if an energy loss occurs.

## Revendications

1. Dispositif pour façonner par une pression différentielle des plaques (4) ou des sections de bandes de film en une matière plastique thermoplastique chauffées, composé d'une station de formage (1), d'une table de formage (7) mobile en hauteur et portant un moule (8) et d'une installation de chauffage (5) pouvant être déplacée au moyen d'un vérin pneumatique (23) entre une position de repos et une position de chauffe, **caractérisé par** un système de mesure de déplacement (30) pour l'acquisition de la position de l'installation de chauffage (5), par un étrangleur (26) sur la conduite d'alimentation et/ou sur la conduite d'évacuation d'air du vérin pneumatique (23) ou sur la conduite (37) reliant les deux côtés d'un vérin d'amortissement (34) disposé en parallèle avec le vérin pneumatique (23) et dont la tige de vérin (35) est reliée à la tige de vérin (36) du vérin pneumatique (23) ou à l'installation de chauffage (5), et par une commande (27) qui modifie la section des étrangleurs (26) en fonction de la position de l'installation de chauffage (5).

2. Dispositif selon la revendication 1, **caractérisé en ce que** le côté du vérin pneumatique (23) dont la mise sous pression réalise le déplacement de l'installation de chauffage (5) à la position de repos (22) est en liaison, par l'intermédiaire d'une soupape de traversée (31), avec un accumulateur de pression (32) alimenté par une source d'air comprimé (29), cette soupape de traversée (31) étant fermée lorsque le dispositif est en fonctionnement et étant ouvert en cas d'une panne d'énergie.
